# FASCICULE DE BREVET EUROPEEN

(11) **EP 2 386 831 B1**
(45) Date de publication et mention de la délivrance du brevet: **07.01.2015**
(21) Numéro de dépôt: 11354004.1
(22) Date de dépôt: 21.02.2011
(51) Int. Cl.: G01D 5/14, G05G 9/047, G06F 3/033

(54) **Dispositif de commande de type joystick**
Kreuzhebelartige Steuervorrichtung
Joystick type control device

(30) Priorité: 10.05.2010 FR 1001988
(43) Date de publication de la demande: 16.11.2011
(73) Titulaire: Crouzet Automatismes, 26000 Valence (FR)
(72) Inventeur: Carton, Hervé, 38050 Grenoble Cedex 09 (FR); Giroud, Pierre, 38050 Grenoble Cedex 09 (FR)
(74) Mandataire: Colombo, Michel

(56) Documents cités:
- GB-A- 2 303 707
- US-A- 4 459 578
- US-A- 5 831 596
- US-A1- 2002 033 798

## Description

### DOMAINE TECHNIQUE DE L'INVENTION

L'invention est relative à un dispositif de commande comprenant un boîtier, un levier de commande comportant un aimant annulaire à aimantation axiale parallèle à un axe longitudinal dudit levier. Des premiers capteurs magnétiques sont disposés selon une répartition circulaire par rapport à l'axe longitudinal. Lesdits capteurs magnétiques sont placés en vis-à-vis de l'aimant annulaire à une distance de détection. Un pivotement du levier de commande dans une direction réduit la distance de détection de manière à ce que les capteurs magnétiques détectent une variation de flux magnétique de l'aimant annulaire liée au déplacement dudit levier.

Un tel dispositif de commande est p.ex. décrit dans le document US 2002/033798 A1.

### ETAT DE LA TECHNIQUE ANTERIEURE

L'utilisation de dispositifs de commande comportant un organe manuel de commande est largement répandue notamment pour des applications aéronautiques telles que les poignées de commande d'avions ou d'hélicoptères. On observe aussi ce type de dispositif de commande dans l'automobile, l'informatique ou des applications de manutention ou de levage.

De nombreux brevets décrivent des dispositifs de commande où un levier de commande comporte un ou plusieurs degré de liberté. Le basculement ou la rotation du levier de commande dans une des directions de commande permet notamment d'envoyer un ordre de commande.

Les dispositifs de commande peuvent comporter généralement un ou plusieurs moyens de détection des mouvements du levier de commande. Les moyens de détection comportent notamment des capteurs à effet Hall associés à des aimants permanents ou des systèmes inductifs à base de bobinages ou encore des capteurs résistifs potentiométriques.

En outre les dispositifs de commande peuvent aussi comporter des moyens d'indexation de la position des moyens de commande. Les moyens d'indexation permettent à l'utilisateur d'avoir un rendu tactile de la position du levier de commande. De manière générale, des moyens d'indexation mécaniques présentent une endurance limitée car les pièces en mouvement peuvent notamment casser après un certain nombre d'utilisations ou de contraintes cycliques. En outre, la présence de contacts entre différentes pièces mécaniques introduit des frottements pouvant nuire au déplacement des leviers de commande.

### EXPOSE DE L'INVENTION

L'invention vise donc à remédier aux inconvénients de l'état de la technique, de manière à proposer un dispositif de commande comportant des moyens d'indexation.

Le levier de commande un dispositif de commande selon l'invention comporte un second aimant à aimantation axiale inversée par rapport à l'aimantation axiale de l'aimant annulaire, ledit second aimant étant positionné au centre de l'aimant annulaire de manière à ce qu'un flux magnétique entre les deux aimants soit maximum.

Selon un mode de développement de l'invention, le dispositif de commande comporte un second capteur magnétique placé dans l'alignement de l'axe longitudinal à une seconde distance de détection du second aimant, un déplacement du levier de commande selon l'axe longitudinal entrainant le déplacement du second aimant vers le second capteur magnétique et la détection du mouvement selon ledit axe longitudinal.

De préférence, une seconde extrémité du levier de commande est destinée à effectuer une rotation par rapport à une première extrémité en se déplaçant selon au moins quatre directions de commande dans un plan.

Avantageusement, la seconde extrémité du levier de commande est destinée à effectuer une rotation par rapport à la première extrémité en se déplaçant selon un cône de révolution.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :

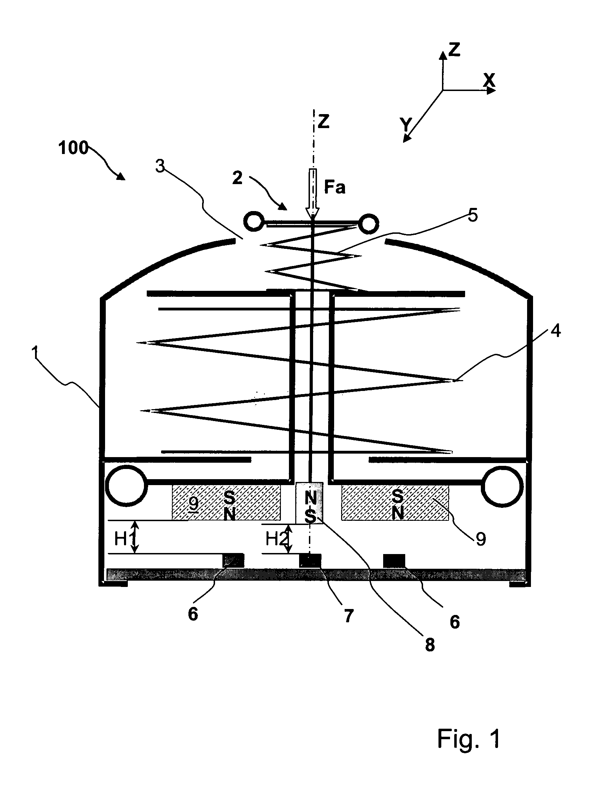

- la figure 1 représente une vue schématique du dispositif de commande selon un mode préférentiel de réalisation de l'invention.

### DESCRIPTION DETAILLEE D'UN MODE DE REALISATION

Comme représenté sur la figure 1, le dispositif de commande 100 comporte un boîtier 1 dans lequel est positionné un levier de commande 2 destiné à être manoeuvré par un utilisateur.

Le levier de commande 2 comprend deux extrémités. Une première extrémité reliée au boîtier 1 par l'intermédiaire d'une liaison pivot. La seconde extrémité du levier de commande 2 comporte de préférence une poignée de commande destinée à être manipulée par un utilisateur. L'alignement des deux extrémités définit un axe longitudinal Z du levier de commande 2. La seconde extrémité ainsi qu'une partie du levier de commande 2 sont situés à l'extérieur du boîtier 1. Une ouverture 3 pratiquée dans le boîtier 1 permet le passage du levier de commande 2 de l'extérieur vers l'intérieur dudit boîtier.

Le levier de commande 2 est relié à des moyens électriques de commande. Les moyens électriques de commande comportent des moyens de détection 6, 7, 8, 9 destinés à la détection du mouvement de levier de commande 2 dans au moins une direction. Ces moyens de détection 6, 7, 8, 9 sont reliés à des moyens de traitement non représentés pouvant notamment envoyer un ordre de commande.

Selon ce mode de réalisation, les moyens électriques de commande comportent des premiers moyens de détection destinés à détecter le mouvement/déplacement de la seconde extrémité du levier de commande 2 selon au moins une direction de commande définie suivant un axe d'un plan XY, la seconde extrémité effectuant une rotation par rapport à la première extrémité. Dans le mode de réalisation décrit, la seconde extrémité peut effectuer des déplacements selon au moins quatre directions de commande (+X, -X, +Y, -Y). En effet, le levier de commande 2 peut pivoter autour de la liaison rotule pour décrire un cône de révolution d'axe de révolution Z. L'ouverture 3 dans le boîtier 1 est de préférence circulaire. Le diamètre de ladite ouverture est alors calibré afin de permettre au levier 2 de décrire le cône de révolution. Ainsi, les premiers moyens de détection détectent le déplacement de la seconde extrémité du levier de commande 2 selon une direction du plan XY.

Les premiers moyens de détection comportent un premier aimant 9 de forme annulaire fixé à la seconde extrémité du levier de commande 2. Le premier aimant 9 de forme annulaire est positionné dans un plan perpendiculaire à l'axe longitudinal Z. En outre le centre de l'aimant annulaire est sensiblement confondu avec ledit axe longitudinal. Le premier aimant 9 a une aimantation alignée selon l'axe longitudinal Z. On parlera par la suite d'aimantation axiale. Les premiers moyens de détection comportent en outre au moins quatre premiers capteurs magnétiques 6 disposés sur un plan sensiblement parallèle au plan du premier aimant 9. Les premiers capteurs magnétiques 6 sont disposés selon une répartition circulaire par rapport à l'axe longitudinal Z. Comme représenté sur la figure 1, les deux plans sont séparés d'une première distance de détection H1. Au repos, c'est-à-dire lorsque le levier de commande 2 n'a pas été déplacé, la première distance de détection H1 est suffisante pour que les premiers capteurs magnétiques 6 ne perçoivent pas de signal issu du premier aimant 9 de forme annulaire. Un pivotement du levier de commande 2 dans une direction réduisant la première distance de détection H1 de manière à ce que les premiers capteurs magnétiques 6 détectent une variation de flux magnétique de l'aimant annulaire 9, variation liée au déplacement dudit levier.

Selon une variante de réalisation, au repos, c'est-à-dire lorsque le levier de commande 2 n'a pas été déplacé, les premiers capteurs magnétiques 6 perçoivent respectivement un même signal d'offset issu du premier aimant 9 de forme annulaire. Les premiers capteurs magnétiques 6 sont destinés s mesurer les variations d'un champ magnétique produit par le premier aimant 9. Le levier de commande 2 est positionné dans une position de repos grâce à la présence d'un ressort de rappel 4. Le ressort de rappel 4 se compose de préférence d'un ressort hélicoïdal. Dans la position de repos, l'axe longitudinal dudit ressort est confondu avec l'axe longitudinal Z du levier de commande 2. Ce ressort comporte une première face radiale en appui sur la seconde extrémité notamment au niveau de la poignée de commande. Le ressort comporte une seconde face en appui sur la seconde face d'appui du boitier 1.

Selon une variante de réalisation, le dispositif de commande 1 comprend des moyens de réglage de la force de maintien F du ressort de rappel 4. En pratique, le ressort hélicoïdal est plus ou moins compressé. A titre d'exemple, la poignée de commande 2 peut se déplacer suivant l'axe z, et comprimer plus ou moins le ressort 4.

Selon ce mode de réalisation, les moyens électriques de commande comportent des seconds moyens de détection destinés à détecter le mouvement/déplacement du levier de commande 2 selon l'axe longitudinal Z.

Les seconds moyens de détection comporte un second aimant 8 fixé à la seconde extrémité du levier de commande 2. Le second aimant 8 est positionné sur l'axe longitudinal Z. Le second aimant 8 comporte une aimantation axiale inversée par rapport à l'aimantation axiale de l'aimant annulaire 9. Le second aimant 8 est positionné sensiblement au centre de l'aimant annulaire 9 ledit second aimant étant positionné au centre de l'aimant annulaire 9 de manière à ce que un flux magnétique entre les deux aimants 8, 9 soit maximum.

Les seconds moyens de détection comportent un second capteur magnétique 7 disposé à une seconde distance de détection H2. A titre d'exemple, le second capteur magnétique 7 est disposé sur le même plan que celui supportant les premiers capteurs magnétiques 6. Au repos, c'est-à-dire lorsque le levier de commande 2 n'a pas été déplacé, la seconde distance de détection H2 est suffisante pour que le second capteur magnétique 7 ne perçoive pas de signal issu du second aimant 8. Selon une variante de réalisation, en position de repos, le second capteur magnétique 7 perçoit un même signal d'offset issu du second aimant 8.

Sous l'action d'une force manuelle d'actionnement FA, le levier de commande 2 peut se déplacer sur une distance Z1. Des moyens élastiques 5 maintiennent écarté l'élément magnétique aimanté 8 du second capteur magnétique 7 en exerçant une force de répulsion. La force de répulsion tend alors à s'opposer à l'action d'une force manuelle d'actionnement FA. Pour déplacer le levier de commande 2, la force manuelle d'actionnement FA est supérieure à la force de répulsion des moyens élastiques 5. Sous l'action de la force manuelle d'actionnement FA, la seconde distance de détection H2 tend à se réduire et le champ magnétique mesuré par le second capteur magnétique 7 varie. Cette variation de champ magnétique est interprétée par des moyens de traitement non représentés.

En outre, au cours du déplacement de l'élément magnétique aimanté 8 en direction du second capteur magnétique 7 selon l'axe longitudinal Z, la force magnétique d'attraction entre le premier et le second aimants 8, 9 tend à s'opposer au mouvement du levier de commande 2.

Dans une première partie du déplacement, la force magnétique axiale apparaissant entre l'aimant 8 et l'aimant 9 tend à s'opposer à la force d'actionnement FA car les pôles de même nature se repoussent, un pole sud étant alors face d'un autre pole sud.

Dans une seconde partie du déplacement, l'action magnétique prépondérante vient du fait que les pôles N des aimants se repoussent à leur tour, créant cette fois une action magnétique qui va dans le sens de l'actionnement.

Ainsi, dans la première partie du déplacement, l'utilisateur ressent une opposition à son action puis brusquement cette opposition cesse et se transforme en une aide au déplacement. Ainsi, en appliquant une force d'actionnement FA sur le levier de commande 2, l'utilisateur ressent, selon cette direction de commande Z, un effet tactile qui lui fait comprendre qu'il a passé un « seuil » de basculement. La position de ce seuil correspond à la position à laquelle le moyen de détection 7 enregistre un changement d'état.

## Revendications

1. Dispositif de commande (1) comprenant
• un boîtier (1),
• un levier de commande (2) comportant un aimant annulaire (9) à aimantation axiale parallèle à un axe longitudinal (Z) dudit levier,
• des premiers capteurs magnétiques (6) disposés selon une répartition circulaire par rapport à l'axe longitudinal (Z), lesdits capteurs magnétiques étant placés en vis-à-vis de l'aimant annulaire (9) à une première distance de détection (H1), un pivotement du levier de commande (2) dans une direction réduisant la première distance de détection (1) de manière à ce que les premiers capteurs magnétiques (6) détectent une variation de flux magnétique de l'aimant annulaire (9) liée à un déplacement dudit levier,
**caractérisé en ce que** le levier de commande (2) comporte un second aimant (8) à aimantation axiale inversée par rapport à l'aimantation axiale de l'aimant annulaire (9), ledit second aimant étant positionné au centre de l'aimant annulaire (9) de manière à ce qu'un flux magnétique entre les deux aimants (8, 9) soit maximum.

2. Dispositif de commande selon la revendication 1 **caractérisé en ce qu'**il comporte un second capteur magnétique (7) placé dans l'alignement de l'axe longitudinal (Z) à une seconde distance de détection (H2) du second aimant (8), un déplacement du levier de commande (2) selon l'axe longitudinal (Z) entrainant le déplacement du second aimant (8) vers le second capteur magnétique (7) et la détection du mouvement selon ledit axe longitudinal.

3. Dispositif de commande selon l'une quelconque des revendications 1 à 2 **caractérisé en ce que** une seconde extrémité du levier de commande (2) est destinée à effectuer une rotation par rapport à une première extrémité en se déplaçant selon au moins quatre directions de commande dans un plan (XY).

4. Dispositif de commande selon la revendication 3 **caractérisé en ce que** la seconde extrémité du levier de commande (2) est destinée à effectuer une rotation par rapport à la première extrémité en se déplaçant selon un cône de révolution.

## Patentansprüche

1. Steuervorrichtung (1), welche aufweist:
• ein Gehäuse (1),
• einen Steuerhebel (2), der einen Ringmagneten (9) mit axialer Magnetisierung aufweist, die zu einer Längsachse (Z) des Hebels parallel ist,
• erste Magnetsensoren (6), die gemäß einer kreisförmigen Verteilung bezüglich der Längsachse (Z) angeordnet sind, wobei die Magnetsensoren gegenüber dem Ringmagneten (9) in einem ersten Detektionsabstand (H1) angeordnet sind, wobei eine Schwenkung des Steuerhebels (2) in einer Richtung den ersten Detektionsabstand (1) verringert, derart, dass die ersten Magnetsensoren (6) eine Änderung des Magnetflusses des Ringmagneten (9) erfassen, die mit einer Verlagerung des Hebels zusammenhängt,
**dadurch gekennzeichnet, dass** der Steuerhebel (2) einen zweiten Magneten (8) mit einer axialen Magnetisierung aufweist, die bezüglich der axialen Magnetisierung des Ringmagneten (9) umgekehrt ist, wobei der zweite Magnet in der Mitte des Ringmagneten (9) positioniert ist, so dass ein Magnetfluss zwischen den zwei Magneten (8, 9) maximal ist.

2. Steuervorrichtung nach Anspruch 1, **dadurch gekennzeichnet, dass** sie einen zweiten Magnetsensor (7) aufweist, der auf der Längsachse (Z) fluchtend in einem zweiten Detektionsabstand (H2) von dem zweiten Magneten (8) angeordnet ist, wobei eine Verschiebung des Steuerhebels (2) entlang der Längsachse (Z) die Verschiebung des zweiten Magneten (8) in Richtung des zweiten Magnetsensors (7) und die Erfassung der Bewegung entlang der Längsachse zur Folge hat.

3. Steuervorrichtung nach einem der Ansprüche 1 bis 2, **dadurch gekennzeichnet, dass** ein zweites Ende des Steuerhebels (2) dazu bestimmt ist, eine Drehung bezüglich eines ersten Endes auszuführen, indem es sich in mindestens vier Steuerrichtungen in einer Ebene (XY) bewegt.

4. Steuervorrichtung nach Anspruch 3, **dadurch gekennzeichnet, dass** das zweite Ende des Steuerhebels (2) dazu bestimmt ist, eine Drehung bezüglich des ersten Endes auszuführen, indem es sich entlang eines Kreiskegels bewegt.

## Claims

1. Control device (1) comprising
• a housing (1),
• a control lever (2) comprising an annular magnet (9) with axial magnetization parallel to a longitudinal axis (Z) of said lever,
• first magnetic sensors (6) arranged according to a circular distribution relative to the longitudinal axis (Z), said magnetic sensors being placed facing the annular magnet (9) at a first detection distance (H1), a pivoting of the control lever (2) in a direction reducing the first detection distance (1) so that the first magnetic sensors (6) detect a variation of magnetic flux of the annular magnet (9) linked to a displacement of said lever,
**characterized in that** the control lever (2) comprises a second magnet (8) with reverse axial magnetization relative to the axial magnetization of the annular magnet (9), said second magnet being positioned at the centre of the annular magnet (9) so that a magnetic flux between the two magnets (8, 9) is maximum.

2. Control device according to Claim 1, **characterized in that** it comprises a second magnetic sensor (7) placed in the alignment of the longitudinal axis (Z) at a second detection distance (H2) from the second magnet (8), a displacement of the control lever (2) along the longitudinal axis (Z) leading to the displacement of the second magnet (8) towards the second magnetic sensor (7) and the detection of the movement along said longitudinal axis.

3. Control device according to any one of Claims 1 and 2, **characterized in that** a second end of the control lever (2) is intended to perform a rotation relative to a first end by being displaced in at least four control directions in a plane (XY).

4. Control device according to Claim 3, **characterized in that** the second end of the control lever (2) is intended to perform a rotation relative to the first end by being displaced in a cone of revolution.
